# FASCICULE DE BREVET EUROPEEN

(11) **EP 3 692 874 B1**
(45) Date de publication et mention de la délivrance du brevet: **26.07.2023**
(21) Numéro de dépôt: 19155801.4
(22) Date de dépôt: 06.02.2019
(51) Int. Cl.: A47J 47/14, A45C 11/20

(54) **RÉCIPIENT COMPORTANT UN BOÎTIER, UN COUVERCLE ET AU MOINS UN CONTENEUR ET CONTENEUR ADAPTÉ À UN TEL RÉCIPIENT**
GEFÄSS, DAS EIN GEHÄUSE, EINEN DECKEL UND MINDESTENS EINEN BEHÄLTER UMFASST, UND AN EIN SOLCHES GEFÄSS ANGEPASSTER BEHÄLTER
VESSEL COMPRISING A HOUSING, A LID AND AT LEAST ONE CONTAINER AND CONTAINER ADAPTED TO SUCH A VESSEL

(43) Date de publication de la demande: 12.08.2020
(73) Titulaire: The Côtelette Sàrl, 1446 Baulmes VD (CH)
(72) Inventeur: PERUSSET, Frédéric, 1446 Baulmes (CH); PERUSSET, Grégory, 1446 Baulmes (CH)
(74) Mandataire: Omnis-IP

(56) Documents cités:
- FR-A1- 3 049 587
- US-A1- 2014 261 381
- US-A1- 2016 045 054

## Description

### DOMAINE TECHNIQUE

Les concepts décrits dans le présent document sont du domaine des récipients pour des matériaux en vrac solides et/ou liquides et concernent en particulier un récipient avec fermeture étanche pour des produits en vrac et notamment pour des produits alimentaires.

Plus précisément, le présent document décrit un récipient comportant un boîtier ayant une ouverture, un couvercle adapté à l'ouverture du boîtier et un mécanisme de serrage configuré pour maintenir le couvercle sur le boîtier et en fermer l'ouverture ou pour libérer le couvercle du boîtier et ouvrir ladite ouverture, ce récipient comprenant en outre au moins un conteneur amovible pouvant être placé à l'intérieur du boîtier; et un système d'étanchéité entre chacun des conteneurs amovibles et le couvercle, ce système d'étanchéité étant configuré pour rendre les conteneurs amovibles étanches lorsque le couvercle est maintenu sur le boîtier par le mécanisme de serrage.

### ETAT DE LA TECHNIQUE

Il existe des boîtes de transport d'aliments dites « lunch box » ou boîte à repas pour le transport de repas individuels. La plupart de ces boîtes sont faites en plastique ou en polymères et ont un couvercle qui, une fois appliqué sur la boîte, rendent cette boîte étanche en ce sens que des liquides qui se trouvent à l'intérieur de la boîte ne peuvent pas s'en échapper.

Pour permettre le transport de repas comprenant plusieurs aliments qui ne doivent pas se mélanger, il existe des boîtes de transport d'aliments qui comportent un plateau et plusieurs compartiments prévus pour séparer les différents aliments. Une telle boîte comprend un couvercle qui se ferme contre le plateau pour empêcher le mélange entre les aliments. Il est pratique de fabriquer de telles boîtes alimentaires en plastique parce que le plastique est facile à mouler dans la forme requise. Les boîtes en plastiques pour des aliments froids ou chauds sont aussi pratiques à emporter et à manipuler.

Il existe des boîtes pour aliment similaires à celles décrites plus haut, dans lesquelles le couvercle est fixé sur l'un des bords de la boîte par un joint articulé par exemple. La base et le couvercle comportent chacun des dépressions complémentaires pour former les compartiments. Cette configuration assure une bonne étanchéité entre les compartiments. Dans les boîtes existantes pour le transport de repas, les compartiments sont réalisés par moulage ou par emboutissage par exemple, en une seule pièce. Il n'est donc pas possible de moduler la taille des compartiments. L'absence de modularité des compartiments offre l'avantage de permettre de positionner des joints d'étanchéité dans le couvercle, dans une position correspondant exactement aux bords des compartiments, de façon à assurer l'étanchéité de chaque compartiment. Une telle absence de modularité a par contre l'inconvénient que les compartiments ne peuvent pas être adaptés aux besoins de l'utilisateur.

Il existe donc un besoin pour un récipient et en particulier un récipient pour le transport d'aliments en vrac qui soit modulaire et qui assure l'étanchéité dans toutes les configurations. A cet effet, il serait souhaitable d'avoir un récipient ayant une pluralité de compartiments, qui soient facilement adaptables à différentes quantités et différentes proportions entre les différents aliments, tout en assurant l'étanchéité de chacun des compartiments individuels. Le récipient doit en outre être facile à nettoyer, de préférence à des températures suffisamment élevées pour assurer une bonne stérilisation ou au minimum, une bonne hygiène.

La demande de brevet français FR 3 049 587 décrit une boîte à usage alimentaire comportant un corps de boîte dans lequel peut être disposé un compartiment destiné à recevoir de la nourriture. Le compartiment peut recevoir une garniture d'étanchéité disposé sur sa périphérie et destiné à assurer l'étanchéité lorsque le compartiment est placé dans le corps de boîte et que le couvercle est fermé. La boîte alimentaire peut être considérée comme modulaire en ce sens que des compartiments de différentes grandeurs peuvent être placés dans le corps de la boîte.

Cette boîte alimentaire présente toutefois un inconvénient. En effet, lorsque la boîte doit être nettoyée, l'ensemble du couvercle doit être nettoyé et la boîte est inutilisable pendant le nettoyage. Ceci peut en particulier être gênant lorsque la boîte est utilisée intensivement, par exemple pour la livraison de repas à domicile pour une collectivité. De plus, du fait de la forme du couvercle et en particulier des rainures ou gorges réalisées dans ce couvercle, le nettoyage peut être difficile et il est possible que tous les endroits ne soient pas nettoyés de façon correcte.

Il existe donc un besoin pour une boîte alimentaire permettant un nettoyage optimal des surfaces qui sont en contact avec de la nourriture et dans laquelle la boîte peut être utilisée simplement et intensivement grâce au fait qu'elle comporte des éléments qui peuvent être séparés du reste de la boîte pour nettoyage, pendant que d'autres éléments de la boîte sont utilisés.

### RESUME DE L'INVENTION

Les buts de l'invention sont atteints par un récipient comportant un boîtier ayant une ouverture, un couvercle adapté à l'ouverture du boîtier et un mécanisme de serrage configuré pour maintenir le couvercle sur le boîtier et en fermer l'ouverture ou pour libérer le couvercle du boîtier et ouvrir ladite ouverture, ce récipient comprenant en outre au moins un conteneur amovible pouvant être placé à l'intérieur du boîtier; et un système d'étanchéité entre chacun des conteneurs amovibles et le couvercle, ce système d'étanchéité étant configuré pour rendre les conteneurs amovibles étanches lorsque le couvercle est maintenu sur le boîtier par le mécanisme de serrage, ce récipient étant caractérisé en ce que ledit couvercle a une face intérieure amovible en métal.

Le récipient selon l'invention est prévu pour transporter des marchandises en vrac et en particulier des produits alimentaires. Il peut être très facilement adapté et configuré selon les besoins du moment, et peut par exemple être formé de un, deux, trois ou quatre compartiments, voire plus.

L'étanchéité entre les différents compartiments est assurée de façon très efficace, tout en ayant un récipient très simple d'utilisation. Cette étanchéité permet par exemple de transporter un produit alimentaire dans un conteneur et un produit non alimentaire, non comestible dans un autre conteneur.

Le récipient a des dimensions telles qu'il peut être facilement transporté, par exemple pour faire des achats dans un marché, dans lequel un grand nombre de produits sont vendus en vrac. Plusieurs récipients peuvent également être empilés les uns sur les autres si le volume d'un seul récipient n'est pas suffisant.

Un tel récipient permet un transport facile de marchandises qui sont rarement vendues en vrac, comme par exemple des plats cuisinés contenant une sauce ou un aliment en sauce, ce genre de plats étant généralement difficile à transporter. Lorsqu'ils sont vendus en vrac, soit tous les aliments sont mélangés, ce qui peut être dérangeant selon les aliments choisis, soit les quantités ne peuvent pas être choisies, mais sont fixées par la dimension des compartiments du récipient, cette dimension étant fixe et non adaptable.

Le récipient de l'invention peut être facilement nettoyé, voire stérilisé, ce qui permet d'utiliser de tels récipients pour le transport de marchandises destinées à différentes personnes. De plus, ils peuvent facilement être séparés en différents composants, certains composants de la boîte étant utilisés pendant que d'autres sont nettoyés ou stérilisés. Ainsi, de tels récipients peuvent être utilisés pour la livraison de repas à domicile ou à destination d'établissements publics tels que des hôpitaux par exemple. De tels récipients peuvent également être utilisés comme « doggy bags » pour permettre aux clients de restaurants d'emporter les restes de leur repas.

Le récipient peut également être prévu pour limiter les échanges thermiques avec l'extérieur et/ou entre les conteneurs. Lorsque les échanges thermiques sont limités avec l'extérieur, il est possible de placer des aliments chauds ou des aliments froids dans la boîte. La température de ces aliments ne varie pas beaucoup si le temps de transport n'est pas trop long.

Si les échanges thermiques sont limités entre les conteneurs, il est par exemple possible de placer des aliments chauds dans un ou plusieurs conteneurs et de placer des aliments froids, par exemple une glace, dans un autre conteneur du même récipient. Chacun des aliments reste à une température proche de sa température d'origine.

L'isolation du récipient vers l'extérieur peut se faire par l'utilisation d'un matériau isolant formant le boîtier. Cette isolation peut également se faire en ajoutant une couche d'isolant entre le boîtier et les conteneurs. L'isolation des conteneurs peut également provenir de la matière du conteneur lui-même, ou par l'utilisation d'une couche isolante. Il est également possible d'utiliser un matériau isolant séparant les conteneurs disposés dans le boîtier.

Il est également possible d'ajouter un élément thermique entre les conteneurs, par exemple des poches de glace ou des pochettes chauffantes.

### DESCRIPTION DES DESSINS

La présente invention et ses avantages seront mieux compris grâce à la description détaillée qui suit en référence aux figures annexées, dans lesquelles :
- la figure 1 est une vue éclatée d'un récipient selon la présente invention ;
- la figure 2 illustre un premier mode de réalisation d'une partie d'un récipient selon l'invention ;
- la figure 3 illustre un deuxième mode de réalisation d'une partie d'un récipient selon l'invention ;
- la figure 4 représente un conteneur selon l'invention ; et
- la figure 5 représente un récipient selon l'invention, dans une position fermée.

### DESCRIPTION DETAILLEE

L'invention décrite dans le présent document permet de transporter des marchandises en vrac, en particulier des aliments, dans différents compartiments, sans que la marchandise contenue dans chacun des compartiments ne se mélange. Ceci est particulièrement adapté au cas où la marchandise est de la nourriture, les produits alimentaires de chaque compartiment ne se mélangeant alors pas aux produits des autres compartiments. Les aliments peuvent être des solides, des liquides, des poudres ou des matériaux pâteux.

Selon un mode de réalisation, le présent document décrit un récipient qui peut garantir une hygiène optimale par le fait que les composants de la boîte en contact avec les aliments peuvent être stérilisés, même à plus de 100°C, par exemple à haute pression dans un autoclave. En plus de ses propriétés hygiéniques, le récipient est pratique à porter, qu'il contienne de la nourriture chaude, froide ou de la glace.

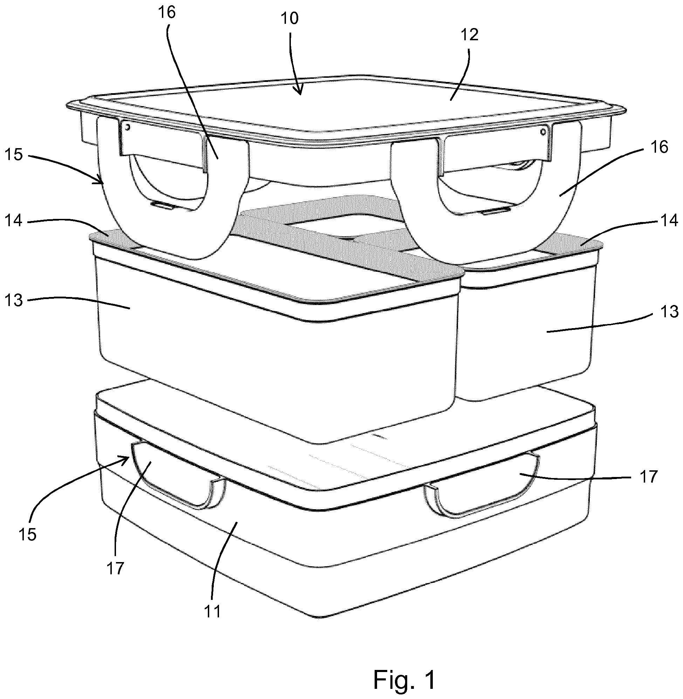

La figure 1 est une illustration d'un récipient 10 selon un mode de réalisation de l'invention. Le récipient 10 comprend essentiellement un boîtier 11, un couvercle 12 et au moins un conteneur 13 amovible. Le boîtier 11 comporte une ouverture, préférablement en haut de la boîte, pour recevoir la marchandise en vrac et en particulier des aliments.

Le boîtier 11 et son couvercle 12 peuvent être réalisés en un polymère, naturel ou synthétique, de façon que l'ensemble soit confortable et agréable à manipuler. Des polymères isolants sont connus et ont l'avantage d'assurer que l'utilisateur ne se brûle pas ni ne gèle au contact du récipient. Dans d'autres modes de réalisation, le boîtier 11 et son couvercle 12 peuvent être réalisés en métal, en bois, en un matériau composite ou en tout autre matière adaptée.

Comme mentionné ci-dessus, le récipient 10 comprend en outre au moins un conteneur 13 amovible, et suivant la configuration, une pluralité de conteneurs. Les conteneurs 13 amovibles ont une ouverture supérieure délimitée par un bord sur lequel est fixée une lèvre élastique 14. Les conteneurs 13 sont prévus pour être disposés à l'intérieur du boîtier 11. Ces conteneurs 13 ont une hauteur qui est sensiblement la même que la hauteur du boîtier. Plus précisément, la hauteur des conteneurs 13 est telle que lorsqu'ils sont disposés dans le boîtier 11 et que le couvercle 12 est fermé, les lèvres élastiques 14 des conteneurs prennent appui contre une face intérieure du couvercle 12, sur toute la longueur de la lèvre.

Ainsi, lorsque des conteneurs 13 sont disposés à l'intérieur du boîtier 11 et que des marchandises telles que des aliments sont disposés dans les conteneurs 13, l'étanchéité entre les différents conteneurs 13 est assurée par l'action du couvercle 12 qui presse contre les lèvres élastiques 14 des conteneurs. La lèvre élastique 14 peut être réalisée en une matière polymère synthétique ou naturelle par exemple.

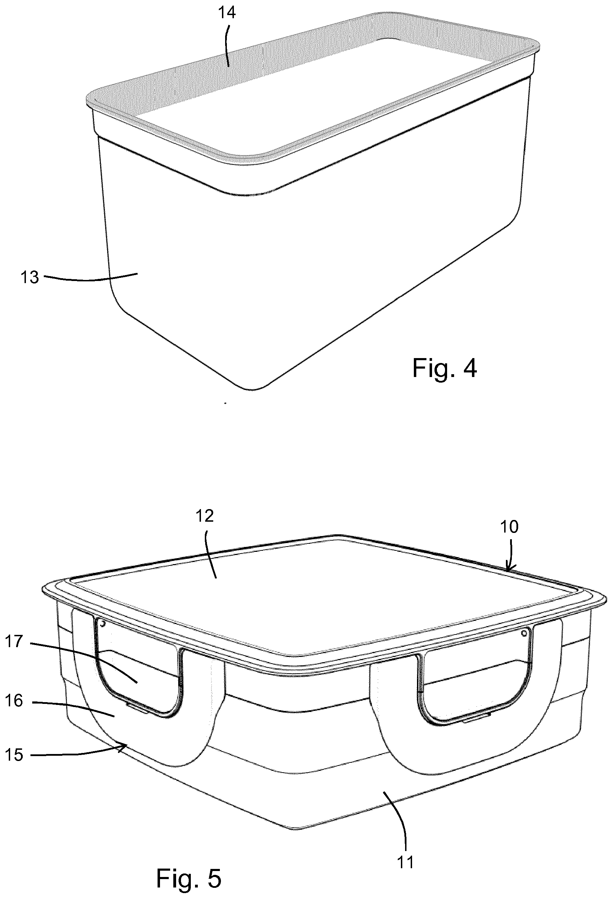

Le récipient 10 comprend un mécanisme de serrage 15 qui peut être actionné pour exercer une force sur le couvercle 12 et presser ce couvercle contre l'ouverture du boîtier 11 et ainsi contre les lèvres élastiques 14 des conteneurs 13 à l'intérieur du boîtier 11. Un exemple d'un tel mécanisme est illustré dans la figure 5 notamment. Dans ce mécanisme, le couvercle 12 comporte quatre poignées 16 solidaires du couvercle et montées de façon à pouvoir pivoter par rapport à ce couvercle. Le mécanisme de serrage 15 comporte également quatre loquets de verrouillage 17 réalisés sur quatre faces externes du boîtier 11.

Pour actionner le mécanisme de serrage 15, les quatre poignées 16 du couvercle sont pivotées de façon à s'engager sur les quatre loquets de verrouillage 17 du boîtier 11. Les poignées 16 et les loquets de verrouillage 17 sont dimensionnés, configurés et positionnés de façon à ce que le couvercle 12 soit légèrement pressé en direction de l'intérieur du boîtier 11.

En serrant le couvercle 12 contre le boîtier 11, les lèvres élastiques 14 des conteneurs 13 amovibles disposés dans le boîtier 11 sont pressées contre la face intérieure du couvercle 12 et maintenues en contact avec cette face intérieure du couvercle par l'action du mécanisme de serrage 15. Ainsi, les différentes marchandises ou les différents aliments restent dans leurs compartiments respectifs et ne se mélange pas pendant le transport du récipient. Tout mécanisme de serrage peut être employé, du moment que ce mécanisme puisse être actionné et qu'une pression suffisante puisse être maintenue entre le couvercle 12 et les lèvres élastiques 14 pour empêcher le mélange des différentes marchandises dans leurs conteneurs respectifs quand le mécanisme est actionné.

En particulier, il est possible de prévoir un couvercle relié au boîtier par une charnière et comportant une poigné sur un côté du couvercle opposée à la charnière. La poignée coopère avec un loquet de verrouillage pour maintenir le couvercle contre le boîtier.

Une hygiène optimale peut être garantie notamment quand les conteneurs 13 et la face intérieure du couvercle sont réalisés en métal. Un exemple de métal adapté pour les conteneurs et pour l'intérieur du couvercle est l'acier inoxydable, qui est souvent utilisé dans les domaines où les ustensiles doivent être stérilisés. Selon un mode de réalisation du récipient de l'invention, le couvercle comporte une couche métallique, telle qu'une plaque d'acier inoxydable amovible. La plaque d'acier inoxydable peut être détachée du couvercle et cette plaque et les conteneurs peuvent êtres stérilisés, par exemple dans un autoclave. Les autres composant du récipient peuvent être nettoyés séparément, par exemple à une température moins élevée.

Selon un mode de réalisation particulier, les lèvres élastiques 14 sont amovibles. Elles peuvent être retirées des conteneurs 13 et y être replacées. Ceci permet par exemple un nettoyage particulier des lèvres élastiques, une désinfection ou un remplacement.

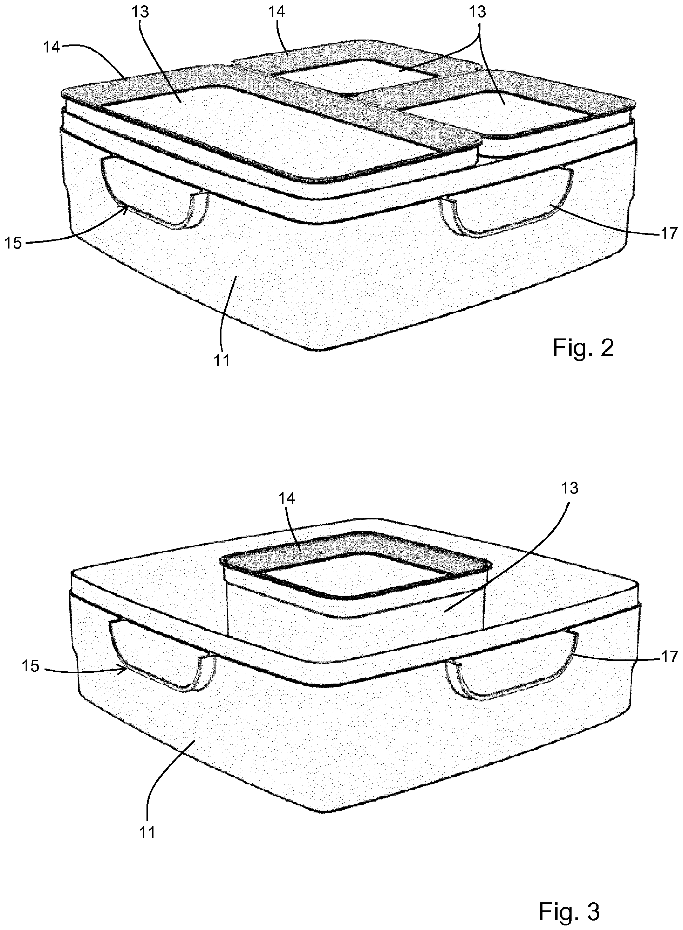

La figure 2 illustre un exemple d'un mode de réalisation de l'invention qui comprend trois conteneurs 13 amovibles. La figure 3 représente un mode de réalisation d'un récipient ayant un seul conteneur 13 amovible. Le boîtier 11 pourrait comprendre un nombre différent de conteneurs 13, par exemple un, deux, trois ou quatre conteneurs. Les conteneurs peuvent avoir des tailles différentes, de façon à proposer un système qui soit modulable. Par exemple deux conteneurs ayant la longueur du boîtier et la moitié de sa largeur peuvent être disposés dans le boîtier ou quatre conteneurs, chacun ayant la moitié de la largeur et de la longueur du boîtier. Ainsi, le choix des conteneurs peut être optimisé en fonction des quantités ou des proportions de marchandises ou d'aliments à transporter ou à stocker. Il est par exemple possible d'optimiser les quantités d'aliments pour obtenir un repas équilibré.

Il est à noter qu'il est possible d'utiliser un ou plusieurs conteneurs 13 qui ne remplissent pas le boîtier, comme cela est illustré par la figure 3. En effet, du fait de la pression du couvercle 12 sur les lèvres élastiques 14 bordant les conteneurs 13, lorsque le couvercle est fermé et que le mécanisme de serrage 15 est activé, ces conteneurs 13 amovibles ne risquent pas de se déplacer dans le boîtier 11 ou de se renverser même si le boîtier n'est pas rempli.

La figure 4 est une vue de détail d'un conteneur 13 et des lèvres élastiques 14 disposées sur la périphérie de l'ouverture de ce conteneur.

La présente invention permet de réaliser un récipient pour le transport de marchandises qui soit modulable en fonction des besoins de l'utilisateur, qui soit étanche, c'est-à-dire qui ne permette pas l'écoulement de liquide à l'extérieur d'un conteneur, sans pour autant devoir adapter un joint d'étanchéité à chaque configuration d'utilisation. Ce récipient est en outre particulièrement simple à nettoyer, hygiénique et facile d'utilisation.

Un récipient selon l'invention peut être utilisé non seulement pour le transport de marchandises, mais également par exemple pour le stockage de marchandise et pour faciliter le service. Il est ainsi par exemple possible de disposer plusieurs conteneurs, contenant chacun un produit alimentaire différent, ces conteneurs comportant chacun une lèvre et étant rendus étanches par un seul couvercle. Ceci peut être intéressant par exemple pour des ingrédients utilisés pour des pizzas, pour un bar à salades ou pour d'autres produits similaires.

## Revendications

1. Récipient (10) comportant un boîtier (11) ayant une ouverture, un couvercle (12) adapté à l'ouverture du boîtier (11) et un mécanisme de serrage (15) configuré pour maintenir le couvercle (12) sur le boîtier (11) et en fermer l'ouverture ou pour libérer le couvercle (12) du boîtier (11) et ouvrir ladite ouverture, ce récipient comprenant en outre au moins un conteneur (13) amovible pouvant être placé à l'intérieur du boîtier (11); et un système d'étanchéité entre chacun des conteneurs (13) amovibles et le couvercle (12), ce système d'étanchéité étant configuré pour rendre les conteneurs (13) amovibles étanches lorsque le couvercle (12) est maintenu sur le boîtier (11) par le mécanisme de serrage (15), ce récipient étant **caractérisé en ce que** ledit couvercle (12) a une face intérieure amovible en métal.

2. Récipient selon la revendication 1, **caractérisé en ce que** chacun des conteneurs (13) amovibles comporte une ouverture supérieure délimitée par un bord sur lequel est fixée une lèvre élastique (14), le système d'étanchéité étant formé par la lèvre élastique (14) coopérant avec le couvercle.

3. Récipient selon la revendication 2, **caractérisé en ce que** la lèvre élastique (14) est placée de façon amovible sur le conteneur (13).

4. Récipient selon la revendication 1, **caractérisé en ce que** la face intérieure du couvercle est réalisée en acier inoxydable.

5. Récipient selon la revendication 1, **caractérisé en ce que** les conteneurs (13) amovibles sont en métal.

6. Récipient selon la revendication 5, **caractérisé en ce que** les conteneurs (13) amovibles sont en acier inoxydable.

7. Récipient selon la revendication 1, **caractérisé en ce que** les conteneurs (13) amovibles sont sélectionnés parmi des conteneurs ayant des tailles différentes prédéterminées.

8. Récipient selon la revendication 1, **caractérisé en ce que** le mécanisme de serrage (15) comporte au moins un loquet de verrouillage (17) disposé sur une paroi externe du boîtier (11) et au moins une poignée (16) solidaire du couvercle (12), cette poignée (16) étant agencée pour s'engager sur ledit loquet de verrouillage (17).

9. Récipient selon l'une quelconque des revendications précédentes, **caractérisé en ce que** le couvercle (12) est lié au boîtier (11) au moyen d'une liaison pivotante.

10. Récipient selon la revendication 9, **caractérisé en ce que** le mécanisme de serrage (15) comporte quatre poignées (16) solidaires du couvercle (12) et quatre loquets de verrouillage (17) disposés sur des parois externes du boîtier (11), chaque poignée (16) étant agencée pour s'engager sur l'un desdits loquets de verrouillage (17).

## Patentansprüche

1. Behälter (10), der ein Gehäuse (11) mit einer Öffnung, einen Deckel (12), der an die Öffnung des Gehäuses (11) angepasst ist, und einen Spannmechanismus (15) umfasst, der konfiguriert ist, um den Deckel (12) auf dem Gehäuse (11) zu halten und die Öffnung zu schließen oder den Deckel (12) von dem Gehäuse (11) zu lösen und die besagte Öffnung zu öffnen, wobei dieser Behälter ferner mindestens einen abnehmbaren Behälter (13) umfasst, der im Inneren des Gehäuses (11) platziert werden kann; und ein Dichtungssystem zwischen jedem der abnehmbaren Behälter (13) und dem Deckel (12), wobei dieses Dichtungssystem konfiguriert ist, um die abnehmbaren Behälter (13) abzudichten, wenn der Deckel (12) auf dem Gehäuse (11) durch den Spannmechanismus (15) gehalten wird, wobei dieser Behälter **dadurch gekennzeichnet ist, dass** der besagte Deckel (12) eine abnehmbare Innenseite aus Metall hat.

2. Behälter nach Anspruch 1, **gekennzeichnet dadurch, dass** jeder der abnehmbaren Behälter (13) eine obere Öffnung aufweist, die durch einen Rand begrenzt wird, an dem eine elastische Lippe (14) befestigt ist, wobei das Dichtungssystem durch die elastische Lippe (14) gebildet wird, die mit dem Deckel zusammenwirkt.

3. Behälter nach Anspruch 2, **gekennzeichnet dadurch, dass** die elastische Lippe (14) abnehmbar auf dem Behälter (13) platziert ist.

4. Behälter nach Anspruch 1, **gekennzeichnet dadurch, dass** die Innenseite des Deckels aus rostfreiem Stahl hergestellt ist.

5. Behälter nach Anspruch 1, **gekennzeichnet dadurch, dass** die abnehmbaren Behälter (13) aus Metall sind.

6. Behälter nach Anspruch 5, **gekennzeichnet dadurch, dass** die abnehmbaren Behälter (13) aus rostfreiem Stahl sind.

7. Behälter nach Anspruch 1, **gekennzeichnet dadurch, dass** die abnehmbaren Behälter (13) unter Behältern mit unterschiedlichen vorgegebenen Größen ausgewählt werden.

8. Behälter nach Anspruch 1, **gekennzeichnet dadurch, dass** der Spannmechanismus (15) mindestens einen Verriegelungsriegel (17), der an einer Außenwand des Gehäuses (11) angeordnet ist, und mindestens einen Griff (16) umfasst, der fest mit dem Deckel (12) verbunden ist, wobei dieser Griff (16) so angeordnet ist, dass er in den besagten Verriegelungsriegel (17) eingreift.

9. Behälter nach einem der vorhergehenden Ansprüche, **gekennzeichnet dadurch, dass** der Deckel (12) mittels einer Schwenkverbindung mit dem Gehäuse (11) verbunden ist.

10. Behälter nach Anspruch 9, **gekennzeichnet dadurch, dass** der Spannmechanismus (15) vier Griffe (16), die mit dem Deckel (12) fest verbunden sind, und vier Verriegelungsriegel (17) umfasst, die an den Außenwänden des Gehäuses (11) angeordnet sind, wobei jeder Griff (16) so angeordnet ist, dass er in einen der besagten Verriegelungsriegel (17) eingreift.

## Claims

1. Receptacle (10) including a housing (11) having an opening, a cover (12) adapted to the opening of the housing (11) and a clamping mechanism (15) configured to hold the cover (12) on the housing (11) and to close its opening or to release the cover (12) from the housing (11) and open said opening, this receptacle further comprising at least one removable container (13) which can be placed inside the housing (11); and a sealing system between each of the removable containers (13) and the cover (12), this sealing system being configured to seal the removable containers (13) when the cover (12) is held on the housing (11) by the clamping mechanism (15), this receptacle being **characterized in that** said cover (12) has a removable internal face made of metal.

2. Receptacle according to claim 1, **characterized in that** each of the removable containers (13) includes an upper opening delimited by an edge on which an elastic lip (14) is fixed, the sealing system being formed by the elastic lip (14) cooperating with the cover.

3. Receptacle according to claim 2, **characterized in that** the elastic lip (14) is removably placed on the container (13).

4. Receptacle according to claim 1, **characterized in that** the internal face of the cover is made of stainless steel.

5. Receptacle according to claim 1, **characterized in that** the removable containers (13) are made of metal.

6. Receptacle according to claim 5, **characterized in that** the removable containers (13) are made of stainless steel.

7. Receptacle according to claim 1, **characterized in that** the removable containers (13) are selected among containers having different predetermined sizes.

8. Receptacle according to claim 1, **characterized in that** the clamping mechanism (15) includes at least one locking latch (17) arranged on an external wall of the housing (11) and at least one handle (16) integral with the cover (12), this handle (16) being arranged to engage on said locking latch (17).

9. Receptacle according to any of the preceding claims, **characterized in that** the cover (12) is connected to the housing (11) by means of a pivoting connection.

10. Receptacle according to claim 9, **characterized in that** the clamping mechanism (15) includes four handles (16) integral with the cover (12) and four locking latches (17) arranged on external walls of the housing (11), each handle (16) being arranged to engage on one of said locking latches (17).
